(19) Europäisches Patentamt
European Patent Office
Office européen des brevets

(11) Veröffentlichungsnummer: **0 133 468 B1**

# (12) EUROPÄISCHE PATENTSCHRIFT

(45) Veröffentlichungstag der Patentschrift: **13.11.91**

(51) Int. Cl.$^5$: **C25B 11/04**, C25D 13/02

(21) Anmeldenummer: **84107495.8**

(22) Anmeldetag: **28.06.84**

(54) **Verfahren zur Herstellung einer Oberflächenschicht zur Herabsetzung der Überspannung an einer Elektrode einer elektrochemischen Zelle.**

(30) Priorität: **04.08.83 CH 4233/83**

(43) Veröffentlichungstag der Anmeldung:
**27.02.85 Patentblatt 85/09**

(45) Bekanntmachung des Hinweises auf die Patenterteilung:
**13.11.91 Patentblatt 91/46**

(84) Benannte Vertragsstaaten:
**CH DE FR IT LI**

(56) Entgegenhaltungen:
**AT-B- 343 147**
**DE-A- 2 807 624**
**DE-B- 2 620 589**
**US-A- 3 616 446**

(73) Patentinhaber: **Nowak, Waldemar, Dr.**
**Jurastrasse 10**
**CH-5300 Turgi(CH)**

(72) Erfinder: **Nowak, Waldemar, Dr.**
**Jurastrasse 10**
**CH-5300 Turgi(CH)**
Erfinder: **Hohl, Ivonne**
**Badstrasse 16**
**CH-5722 Gränichen(CH)**

**EP 0 133 468 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung geht aus von einem Verfahren zur Herstellung einer Oberflächenschicht zur Herabsetzung der Überspannung an einer Elektrode einer elektrochemischen Zelle nach der Gattung des Oberbegriffs des Anspruchs 1.

In elektrochemischen Zellen werden im Betrieb Ueberspannungseffekte beobachtet, welche hauptsächlich an den Elektrodenoberflächen auftreten und die Ursache von Spannungserhöhungen bzw. Spannungsverlusten gegenüber den chemisch-thermodynamisch zu erwartenden theoretischen reversiblen Werten sind. Diese Ueberspannungserscheinungen, welche in der Regel eine Funktion der Stromdichte sind, bedingen entsprechende Energieverluste und damit eine Herabsetzung des Umsetzungswirkungsgrades des elektrochemischen Prozesses.

Um ein elektrochemisches Verfahren in der Technik wirtschaftlich zu gestalten, ist deshalb seit langem versucht worden, die besagten Ueberspannungen zu begrenzen und herabzusetzen. Da die Ueberspannungseffekte von zahlreichen Material- und Betriebsparametern abhängen, wurde versucht, verschiedene Wege zu deren Beherrschung zu beschreiten. Dabei spielen die Werkstoffeigenschaften der Elektrodenoberfläche, deren Chemismus, Morphologie und Struktur sowohl im submikroskopischen wie atomaren Bereich eine wesentliche Rolle. Zu diesem Zweck dienen u.a. sogenannte Elektrokatalysatoren, welche in Form von Oberflächenschichten oder als Bestandteil der Elektrode die letzteren aktivieren. Dabei werden entsprechend den Betriebsbedingungen für die Anode und die Kathode verschiedene, spezifisch wirksame Aktivierungssubstanzen verwendet.

Die meisten bisher angewandten Verfahren zur Elektrodenaktivierung haben die vorwiegend galvanische Beschichtung der Elektrodenoberfläche zum Ziel. Dabei entstehen jedoch oft Werkstoffkombinationen in Form von Mischungen, Legierungen etc., welche über längere Zeiträume betrachtet chemisch-thermodynamisch nicht stabil sind. Die mit derartigen Verfahren aufgebrachten Oberflächenschichten verändern sich im Betrieb und werden mit der Zeit mehr oder weniger unwirksam.

Eine Methode der Herabsetzung der Ueberspannung besteht in der Aufrauhung, d.h. der Vergrösserung der aktiven Elektrodenoberfläche, z.B. durch Sandstrahlen. Derartige Oberflächen sind jedoch in der Regel thermodynamisch und elektrokatalytisch unstabil.

Die Aktivierung von Elektroden durch galvanisches Aufbringen von Edelmetall- und Edelmetallegierungs-Schichten ist allgemein bekannt (siehe US-A-3 992 331; US-A-3 532 556; DE-A-28 44 495). Für den grosstechnischen Einsatz sind diese Verfahren jedoch wegen des hohen Preises der Edelmetalle nur in seltensten Fällen anwendbar.

Ein weiteres Verfahren besteht in der Beschichtung der Elektrode mit Raney-Nickel (siehe US-A-1638 190; US-A-3 272 728; US-A-3 846 344; DE-A-27 51 382; DE-A-29 07 179). Das Verfahren ist jedoch nur mit grossem technischen und experimentellen Aufwand durchzuführen und zeitigt nicht immer befriedigende Resultate. Für die industrielle Anwendung kommt es daher nur in seltenen Fällen in Frage.

Ferner ist die Aktivierung der Elektrodenoberfläche durch Nickel/Schwefel vorgeschlagen worden, indem gleichzeitig Nickel galvanisch abgeschieden und Schwefel aus einer anderen Komponente des Bades an der Elektrode freigemacht wird (siehe DE-A-28 07 624; WO 79/00233; F. Hine, M.M. Watanabe, "Studies of the Nickel-Sulfur Electrodeposited Cathode", Denki Kakagu, 47, No. 7, 1979, Seiten 401-408). Die derart erzeugten Oberflächenschichten sind elektrochemisch und elektrokatalytisch nicht stabil und neigen zufolge ihrer Sprödheit bei Temperaturschwankungen zum Abplatzen.

Eine Aktivierung kann auch durch Beschichtung der Elektrodenoberfläche mit Wolframbronzen vorgenommen werden (siehe D.B. Sepa et al, J. Electrochemical Soc. 119, 1972, Seiten 1285-1288). Das Verfahren ist aufwendig und gute Ergebnisse werden im allgemeinen nur durch zusätzliche teure Edelmetalldotierung erzielt.

Es wurden auch Beschichtungen mit Polytetrafluoräthylen und leitenden Oxyden und Mischoxyden vorgeschlagen (siehe US-A-3 644 147; S. Trasatti, "Electrodes of conductive Metallic Oxides, Elsevier Scientific Publications, Amsterdam 1980/1981). Diese Verfahren lassen sich nur mit hohem technischen und wirtschaftlichen Aufwand durchführen, wodurch sie im grosstechnischen Einsatz nur sehr beschränkt anwendbar sind.

Ausserdem ist die galvanische In-Situ-Aktivierung von Elektroden mittels in Elektrolyten löslicher Substanzen bekannt (US-A-4 160 704). Auch diese Aktivierungen ermangeln der notwendigen Stabilität, sofern nicht sehr teure, für die industrielle Anwendung des Verfahrens nicht in Betracht kommende In-Situ-Abscheidungen von Edelmetallen aufgebracht werden.

In United States Patent 3.616.446 wird ein Verfahren zur Beschichtung einer Elektrode über eine sog. In-Situ-Reaktion beschrieben, die durch mehrmaliges Tauchen in eine die Aktivierungs-Substanzen enthaltende organische Lösung und anschliessendes, die Reaktion in situ auf der Oberfläche der zu beschichtenden Titan-Anode auslösendes Tempern, im Temperaturbereich von 300 °C bis 800 °C, außerhalb einer elektrochemischen Zelle, abläuft.

Unter "in-situ" wird dort nicht, wei bei der hier vorliegenden Erfindung, eine Aktivierung in der geschlossenen und in Betrieb befindlichen Zelle verstanden, sondern die Aktivierung einer Titan-Anode, außerhalb der elektrochemischen Zelle, vor deren Zusammenbau, wobei die die Beschichtung aufbauende Reaktion aus den Komponenten "in-situ" auf der Oberfläche der Titan-Anode abläuft und das Reaktionsprodukt "in-situ", d.h. innerhalb der Schichten auf der oberfläche dieser Titan-Anode entsteht.

Der Erfindung liegt die Aufgabe zugrunde, ein Verfahren zur Herstellung einer Oberflächenschicht zur Herabsetzung der Überspannung an einer Elektrode einer elektrochemischen Zelle anzugeben, wobei ohne großen technischen und experimentellen Aufwand eine hinreichende chemisch-thermodynamische Langzeitstabilität bei bei möglichst großer elektrokatalytischer Wirkung gewährleistet wird. Das Verfahren soll auf bestehende elektrochemische Zellen, sowohl kathoden- wie anodenseitig anwendbar sein.

Diese Aufgabe wird gemäß den Merkmalen des Anspruchs 1 gelöst. Vorteilhafte Weiterbildungen des Verfahrens sind in den Ansprüchen 2-18 niedergelegt.

Das grundlegende Kennzeichen der neuen Oberflächenschicht besteht darin, dass sie porös ist, Hohlräume verschiedener Abmessungen und eine sehr grosse innere Oberfläche besitzt. Dabei kann die Oberflächenschicht Wabenstruktur, Doppelskelettstruktur, dendritischen Aufbau oder sonst eine geeignete Struktur mit grosser aktiver Oberfläche aufweisen. Dies wird grundsätzlich durch eine elektrophoretische In-Situ-Abscheidung einer aus einem der Elemente B, C, O, S, Se, Te und einem Uebergangsmetall, gegebenenfalls zusätzlich einem Alkali- und/oder Erdalkalimetall enthaltenden chemischen Verbindung als Aktivierungssubstanz auf der Elektrode erreicht. Darunter fallen die sogenannten Chalkogenide, d.h. Verbindungen mit den Erzbildnern, vorab Oxyde und Sulfide, ferner die Boride und Karbide. Ausserdem sind zahlreiche polynäre Verbindungen wie Mischoxyde, Mischungen von Oxyden und Sulfiden etc. der erwähnten Elemente geeignet.

Die Erfindung wird anhand der nachfolgenden, durch Figuren erläuterten Ausführungsbeispiele beschrieben.

Dabei zeigt:

Fig. 1 die perspektivische Darstellung eines Ausschnittes aus einer Elektrode mit einer aktiven Oberflächenschicht,

Fig. 2 einen Querschnitt durch eine Elektrode mit einer Oberflächenschicht gemäss Fig. 1,

Fig. 3 den schematischen Aufbau einer Elektrolysezelle mit den Aktivierungsmöglichkeiten für Kathode und Anode,

Fig. 4 ein Diagramm der Kathodenteilspannung in Funktion der Betriebszeit (Langzeitstabilität),

Fig. 5 ein Diagramm der Kathodenteilspannung in Funktion der Betriebszeit (Aktivierungsvorgang während der ersten Betriebsphase).

In Fig. 1 ist ein Ausschnitt aus einer Elektrode mit einer aktivierten Oberflächenschicht perspektivisch dargestellt. 1 ist der aus einem nichtfilmbildenden Metall oder Graphit bestehende Träger, welcher die eigentliche Elektrode darstellt und meist grossflächig, durch ebene Flächen begrenzt, ausgebildet ist. Die auf dem Träger aufsitzende, fest aufgesinterte Aktivierungssubstanz ist als poröser Körper mit Hohlräumen 3 ausgebildet. Die einzelnen, die Hohlräume 3 begrenzenden gröberen Teile des porösen Körpers dieser Oberflächenschicht sind ihrerseits wieder von Poren durchsetzt und weisen zahlreiche Verästelungen in Form von Dendriten 4 auf. Letztere können besagte Kern-Waben-Strukturen aufweisen oder doppelskelettartige Agglomerationen darstellen.

Fig. 2 zeigt einen Querschnitt durch eine Elektrode mit einer Oberflächenschicht gemäss Fig. 1. Auf dem Träger (Substrat) 1 befindet sich - in starker Vergrösserung übertrieben dargestellt - der poröse Körper (Oberflächenschicht) 2, welcher zahlreiche Hohlräume 3 aufweist. Die diese Hohlräume begrenzenden Anhäufungen der Aktivierungssubstanz weisen Dendriten 4 auf, welche ihrerseits im Detail verschiedene formen haben (doppelskelettartige Agglomerationen), was durch verschiedene Darstellungsweisen in der Figur angedeutet ist. Das Ganze stellt im vorliegenden Fall eine Doppelwabenstruktur 5 dar.

In Fig. 3 ist der schematische Aufbau einer $H_2O$-Elektrolysezelle mit den Aktivierungsmöglichkeiten der Kathode und Anode gezeigt. 6 ist die Anode, 7 die Kathode, 8 ein Diaphragma, im vorliegenden Fall alle als plattenförmige Körper, in einem Isoliergehäuse befestigt, ausgebildet. Der Anodenraum 9 (für den Anolyt) ist vom Kathodenraum (Katolyt) 10 durch das Diaphragma 8 getrennt. 11 ist das Sammelrohr für $O_2$, 12 dasjenige für $H_2$. 13 ist der Ausstrittsstutzen für den Anolyt und 14 derjenige für den Katolyt. Die mit Pfeilen versehene Linie 15 stellt den Anolytumlauf, die Linie 16 den Katholytumlauf dar. Im Kreislauf 16 des letzeren ist ein Ausgleichsbehälter 17 eingezeichnet. Als Elektrolyt wird in diesem Fall eine wässrige Lösung von KOH verwendet. 18 markiert mit Pfeilen den Ort der Zugabe der Aktivierungssubstanz. Wird diese in den Behälter 17 gegeben, so spricht man von Tankaktivierung (gestrichelte Linie). Erfolgt die Zugabe zur einzelnen Zelle, so

handelt es sich um Zellenaktivierung (ausgezogene Linie). Im Anolytumlauf 15 ist der Ausgleichsbehälter weggelassen worden.

Es sind jedoch alle Kombinationen denkbar (gesonderter Behälter für Anolyt, gemeinsamer Behälter für den Elektrolyt allgemein).

Fig. 4 zeigt ein Diagramm, in welchem die Kathodenteilspannung $\Delta U_K$ in V, bezogen auf eine Ag/AgCl-Elektrode, in Funktion der Betriebszeit t in h (im logarithmischen Massstab) dargestellt ist. Aus diesem Diagramm erhellt klar die Langzeitstabilität der neuen Aktivierung. Kurve a bezieht sich auf den Verlauf der Kathodenteilspannung einer nichtaktivierten, herkömmlichen Fe-Kathode (Träger $\alpha$), unter herkömmlichen Betriebsbedingungen. Der Elektrolyt bestand aus einer 25 %igen wässerigen KOH-Lösung. Die Temperatur des Elektrolyten betrug 354 K (81 °C), die Stromdichte 0,3 $A/cm^2$ bezogen auf die geometrische Elektrodenoberfläche. Es ist ein leichter Anstieg der Kathodenteilspannung nach 10000 h auf einen Wert von 1,60 V feststellbar. Kurve b zeigt den Verlauf der Kathodenteilspannung einer elektrophoretisch aktivierten Fe-Kathode für eine ausgewählte Aktivierungssubstanz $\beta$ , wobei die Betriebsbedingungen verschärft wurden. Elektrolyt und Temperatur entsprechen demjenigen der Kurve a, die Stromdichte im Betrieb wurde jedoch auf 2,5 $A/cm^2$ hinaufgesetzt. Um vergleichbare Werte zu erhalten, wurde jedoch für die Potentialmessungen die Stromdichte jeweils kurzzeitig während der Messdauer auf 0,3 $A/cm^2$ herabgesetzt. Schon nach wenig mehr als 1 h fiel die Kathodenteilspannung gemäss Kurve b auf den dann über den ganzen Betriebsbereich konstanten Wert von 1,215 V ab. Trotz der um das 8-fache höheren Stromdichte und der damit verbundenen höheren Zellenbelastung stieg die Kathodenteilspannung auch nach 10000 h nicht an. Dies bürgt für die Langzeitstabilität der Aktivierung.

In Fig. 5 ist der Verlauf der Kathodenteilspannung $\Delta U_K$ in V, bezogen auf die Ag/AgCl-Elektrode, als Funktion der Betriebszeit t in h (log) nochmals für den Aktivierungsvorgang während der ersten Betriebsphase in verschobenem Zeitmassstab dargestellt. a und b entsprechen den Kurven in Fig. 4. c ist der Verlauf für eine andere ausgewählte Aktivierungssubstanz $\gamma$. Die Spannung steigt hier zunächst an, um dann noch vor Erreichen der 10. Betriebsstunde steil abzufallen und sich auf dem gleiche Wert wie Kurve b zu stabilisieren. d stellt den Verlauf der Kathodenteilspannung in Funktion der Zeit für eine weitere ausgewählte Aktivierungssubstanz $\delta$ dar. Nach anfänglichem Anstieg auf ca. 1,7 V fällt die Spannung nach 1 h steil ab und stabilisiert sich nach 10 h auf dem üblichen stationären Wert von ca. 1,2 V, ähnlich den Kurven b und c. Alle praktisch untersuchten Aktivierungssubstanzen fallen ungefähr in den Bereich zwischen Kurve b und Kurve c. Dies zeigt, dass der Aktivierungsvorgang unabhängig von der Ausgangslage und der Aktivierungssubstanz innerhalb von ca. 20 h weitgehend abgeschlossen ist und dann mit keinerlei Veränderungen mehr zu rechnen ist.

Ausführungsbeispiel I:

Zur Herstellung einer Oberflächenschicht auf einer Elektrode (Kathode) einer elektrochemischen Zelle wurde wie nachstehend beschrieben vorgegangen. Die Aktivierungssubstanz entsprach in ihrer chemischen Zusammensetzung der Formel

$Ba_2 La Ru O_6$ ,

wobei als Ausgangsmaterialien die Komponenten

$Ba CO_3$ ,
$La_2 O_3$ und
Ru

verwendet wurden.

Die Ausgangsmaterialien wurden zunächst in einer Achat-Planetenkugelmühle während 2 h gemahlen, homogenisiert und im entsprechenden, für die Endzusammensetzung massgebenden stöchiometrischen Verhältnis gemischt. Die Pulvermischung wurde während 16 h im Korundtiegel einer Wärmebehandlung bei einer Temperatur von 580 °C ausgesetzt. Vom erhaltenen Reaktionsprodukt wurden ca. 100 g erneut in einer Achat-Planetenkugelmühle während 2 h gemahlen, homogenisiert und während 6 h bei einer Temperatur von 1200 °C geglüht. Das erhaltende Produkt wurde nochmals analysenrein gemahlen. Vorteilhafterweise werden die letzte Wärmebehandlung und die letzte Mahloperation mehrere Male hintereinander wiederholt. Bei diesen wiederholten Verfahrensschritten konnten keine Gewichtsverluste mehr festgestellt werden. Eine letzte Operation bestand in einem Feinmahlprozess gemäss einem zeitlich abgestuften Mahlprogramm von vorzugsweise 10 bis 12 h Dauer. Generell kann dieses Mahlprogramm 2 bis 20 h umfassen. Das Pulver hatte vorteilhafterweise eine Partikelgrösse von 0,1 bis 50 $\mu m$, bei einem Mengenmaximum bei ca. 10 $\mu m$ Korngrösse. Das feingemahlene Pulver wurde in 25 %iger KOH aufgeschlämmt und in kolloiddisperser Form mit der Flüssigkeit in eine für die Elektrophorese geeignete Laboratoriumszelle gegeben. Die Elektrophorese wurde in an sich bekannter Weise bei einer Stromdichte von 0,3 $A/cm^2$ während einer Zeit von 24 h durchgeführt. Die dabei auf der Kathode abgeschiedene Aktivierungssubstanz betrug ca. 1 $mg/cm^2$ geometrischer Elektrodenoberfläche. Diese In-Situ-Aktivierung kann zweckmässigerweise in mehreren Teilschritten durchgeführt werden. Nach

der eigentlichen kataphoretischen Abscheidung der Aktivierungssubstanz wurde diese zusätzlich auf der Elektrodenoberfläche formiert und stabilisiert. Dies erfolgte durch stufenweise Erhöhung der Stromdichte auf 1 bis 4 A/cm$^2$ während 20 bis 30 h und bestand in einem zusätzlichen "Ansintern" bzw. "Einbrennen" an der Phasengrenze zwischen Elektrodenmaterial (Substrat) und Aktivierungsschicht. Dadurch wurde die effektive Kontaktfläche verbreitert. Auf diese Weise entstand eine poröse, von zahlreichen Hohlräumen durchsetzte, jedoch makroskopisch gesehen einheitliche, wenigstens teilweise zusammenhängende Oberflächenschicht. In allen Fällen wurde - unabhängig von Zusammensetzung und Herstellungsbedingungen - eine Doppelwabenstruktur (doppelskelettartige Ausbildung) mit sehr grosser innerer Oberfläche erzielt. In einem bestimmten Fall betrug der mittlere Hohlraumdurchmesser der Waben 10 bis 50 $\mu$m, während die äusserst feinen Dendriten (Einzeläste) Abmessungen von 0,1 bis 1 $\mu$m aufwiesen. Versuche mit in Laborzellen für $H_2O$-Elektrolyse eingebauten Elektroden sowohl ohne, wie mit Elektrolytumlauf, d.h. ohne und mit hydromechanischer Belastung zeigten gegenüber konventionellen Zellen einen höheren elektrochemischen Wirkungsgrad. Es konnte festgestellt werden, dass die In-Situ-Aktivierung über lange Zeit selbst bei extrem hohen Stromdichten bis zu 4 A/cm$^2$ und Temperaturen bis 100 °C stabil blieb. Die Herabsetzung der Ueberspannung betrug durchweg mindestens 280 mV. Die Zellenspannung konnte auf einen ungefähr konstanten Endwert gesenkt werden, weitgehend unabhängig vom Ausgangspotential. Dies bedeutet, dass die Verbesserung sich besonders an schlechten Zellen mit hohen Anfangsspannungen und schlechter Gasreinheit (Sekundär-Elektrolyse) günstig auswirkt, was vor allem für nachträgliche Aktivierungen bei bereits im Betrieb befindlichen Elektrolyseanlagen mit schlechter Gasreinheit von grosser Bedeutung ist. Ferner konnte eine im Verlaufe der Betriebszeit unveränderte, hohe Gasreinheit von 99,80 % $O_2$ und 99,90 % $H_2$ festgestellt werden.

Ausführungsbeispiel II:

Analog zum Verfahren gemäss Beispiel I wurde die folgende Aktivierungssubstanz durch Mahlen von Pulvern und Wärmebehandlungen hergestellt und in eine feindispers-kolloidale Phase übergeführt:

$Ba_3 Y Ru_2 O_9$ .

Die vollständige Umsetzung der Ausgangsmaterialien wurde durch röntgenographische Untersuchungen sichergestellt. Die Formierung und Stabilisierung der Elektroden erfolgte auf gleiche Art und Weise wie in Beispiel I beschrieben. Die Untersuchungen in einer laboratoriumsgemässen Wasserelektrolysezelle ergaben, dass die Zellenspannung gegenüber nicht aktivierten Elektroden durchweg um mindestens 260 mV gesenkt werden konnte. Auch hier wurde eine ausreichende Langzeitstabilität von mehreren Tausend Stunden festgestellt. Hinsichtlich der Verbesserung der Gasreinheit gilt das unter Beispiel I Gesagte.

Ausführungsbeispiel III:

Nach dem Verfahren gemäss Beispiel I wurde eine weitere Aktivierungssubstanz hergestellt und für die elektrophoretische In-Situ-Aktivierung vorbereitet. Die Substanz hatte folgende Endzusammensetzung:

$Ba\ Fe_{0,1}\ Ru_{0,9}\ O_3$ .

Die Formierung erfolgte wie in Beispiel I beschrieben. Auch in diesem Falle konnte eine Herabsetzung der Zellenspannung von mindestens 240 mV gegenüber den unbehandelten Elektroden gemessen werden. Die Gasreinheit entsprach derjenigen von Beispiel I.

Ausführungsbeispiel IV:

Zur Herstellung einer Oberflächenschicht wurde folgende Aktivierungssubstanz gemäss Beispiel I hergestellt:

$Ca\ Ru\ O_3$ .

Die dabei auftretenden Festkörperreaktionen wurden gravimetrisch und röntgenographisch bis zur vollständigen Umsetzung der Komponenten kontrolliert. Die elektrische Leitfähigkeit dieser Substanz betrug ca. $10^3$ $(\Omega\ cm)^{-1}$.

Die elektrophoretische In-Situ-Aktivierung erfolgte in mehreren Teilschritten, gefolgt von einem gemäss Beispiel I durchgeführten Formierungs- und Stabilisierungsprozess. Die Oberflächenschichten erwiesen sich auch bei einer Belastung mit bis 4 A/cm$^2$ bei Temperaturen über 90 °C als langzeitstabil. Bei einer Stromdichte von 0,3 A/cm$^2$ und einer Temperatur von 80 °C wurde in einem Elektrolyten bestehend aus 25 %iger KOH eine Erniedrigung der Ueberspannung von mindenstens 260 mV festgestellt.

Ausführungsbeispiel V:

Als Aktivierungssubstanz wurde eine chemische Verbindung der nachfolgenden Endzusammensetzung hergestellt:

$$La\ Ru_x\ Fe_{1-x}\ O_3 \text{ mit } 0{,}9 \leq x < 1 .$$

Die Substanz wurde gemäss nachstehender Festkörperreaktion aus den chemisch reinen Komponenten präpariert:

$$2\ La_2O_3 + 2\ (1-x)Fe_2O_3 + 3xRuO_2 + xRu \rightarrow 4\ La\ Ru_x\ Fe_{1-x}\ O_3.$$

Die Komponenten wurden unter Vakuum jeweils bei 1350 °C während 20 h geglüht, gemahlen und wieder geglüht. Dieser Zyklus wurde mehrere Male wiederholt, bis die Umsetzungen vollständig waren, was meist nach dem 3. Zyklus erreicht war. Die Ueberführung des als tiefschwarzes Pulver anfallenden Endprodukts in die feindispers-kolloidale Phase und die darauffolgende elektrophoretische Abscheidung erfolgte wie in Beispiel I beschrieben. Die gemessene Herabsetzung der Ueberspannung betrug 240 mV unter den in Beispiel I angeführten Bedingungen.

Ausführungsbeispiel VI:

Als Ausgangssubstanzen wurden folgende Komponenten verwendet:

$La_2\ O_3$
$Re\ O_3$
Re

Aehnlich den unter Beispiel I angegebenen Methoden wurden durch wiederholtes Mahlen und Glühen der entsprechenden stöchiometrischen Pulvermischungen (Vakuum, 1100 bis 1200 °C) die folgenden Aktivierungssubstanzen hergestellt:

$La_4\ Re_6\ O_{19}$
$La_2\ Re_2\ O_7$
$La_4\ Re_2\ O_{10}$ .

Die gemäss Beispiel I in situ aufgebrachten Aktivierungssubstanzen ergaben sowohl unter Labor- wie grosstechnischen Bedingungen eine Herabsetzung der kathodischen Ueberspannung von mindestens 260 mV unter 300 mA/cm$^2$ Belastung und 80 °C in 25 %iger KOH. Auch bei der mehr als zehnfachen Stromdichte von 4 A/cm$^2$ erwiesen sich die mit obigen Aktivierungssubstanzen hergestellten Oberflächenschichten im Dauerbetrieb als langzeitstabil.
Bei speziell ungünstigen Ausgangsbedingungen - sehr hohe Ueberspannung an der nichtaktivierten Elektrode - konnte eine Erniedrigung der Zellenspannung bis zu 800 mV beobachtet werden mit entsprechender Verbesserung der Gasreinheit. Der Endwert der Kathodenteilspannung betrug in allen Fällen - unabhängig von der Ausgangslage - wenig mehr als 1,2 V. Endwert der Gasreinheit: 99,90 % $H_2$; 99,80 % $O_2$.

Ausführungsbeispiel VII:

Zur Herstellung einer Oberflächenschicht wurde eine Aktivierungssubstanz der folgenden chemischen Zusammensetzung verwendet:

$K\ Re\ O_4$ .

Diese im Labor durch Fällung hergestellte chemisch reine Substanz wurde z.B. durch analysenreines Mahlen in eine feindispers-kolloidale Phase übergeführt. Die in mehreren Teilschritten durchgeführte Aktivierung einer Elektrode wurde elektrophoretisch gemäss Beispiel I vorgenommen. Daraufhin wurde die Oberflächenschicht formiert und stabilisiert. Auch hier gilt allgemein das oben Gesagte. Die Elektrolysezellen erwiesen sich auch bei Stromdichten von mehr als 4 A/cm$^2$ als langzeitstabil. Unter einer Belastung von 300 mA/cm$^2$ und bei einer Temperatur von 80 °C in 25 %iger KOH wurde unter labor- und industriellen Bedingungen eine Reduktion der kathodischen Ueberspannung von mindestens 300 mV gemessen. In Einzelfällen, unter ungünstigen Ausgangsbedingungen der nichtaktivierten Elektroden betrug der Potentialgewinn sogar bis zu 1200 mV.Gasreinheit wie unter Beispiel VI.

Ausführungsbeispiel VIII:

Die Aktivierungssubstanz hatte die Endzusammensetzung

$Na_2\ Re_3\ S_6$ .

Sie wurde ähnlich Beispiel I aus Natriumkarbonat und Rhenium im $H_2S$-Strom bei Temperaturen von 1350 bis 1450 °C hergestellt und durch Mahl/Glüh-Prozesse in die hochreine feindisperskolloidale Phase übergeführt.
In analoger Weise wurde die folgende Aktivierungssubstanz präpariert:

$Sr_2 Re_6 S_{11}$ .

Die in mehreren Teilschritten durchgeführte Elektrophorese sowie die Formierung und Stabilisierung der Oberflächenschicht erfolgte in ähnlicher Weise wie in Beispiel I angegeben. Ueber die Langzeitstabilität gilt das oben bereits Gesagte. Bei einer Stromdichte von 250 mA/cm² und einer Temperatur von 80 °C wurde in 25 %iger KOH eine Herabsetzung der kathodischen Ueberspannung von mehr als 220 mV festgestellt.

Ausführungsbeispiel IX:

Aus chemisch reinen Grundsubstanzen wurden die nachfolgenden Boride ähnlich wie in Beispiel I präpariert und als Aktivierungssubstanzen verwendet:

$U_2$ (Re, Os, Mn, Ru) $B_6$
U (Re, Os, Mn, Ru)· $B_4$
Lu (Ru, Os, Re) $B_4$
$Y_2$ (Ru, Os, Re) $B_6$ ,

wobei die in Klammern stehenden Elemente jeweils allein oder in Kombination vorhanden sein oder sich gegenseitig ersetzen können.
Die Weiterverarbeitung erfolgte analog Beispiel I. Auch hier erwies sich die auf diese Weise hergestellte Oberflächenschicht als langzeitstabil bei Belastungen von 250 mA/cm² unter den oben angegebenen Bedingungen. In allen fällen konnte bei 250 mA/cm², 80 °C, 25 %ige KOH unter labortechnischen Bedingungen eine Herabsetzung der Kathodenteilspannung von über 200 mV festgestellt werden.

Ausführungsbeispiel X:

Die nachfolgenden für die elektrophoretische In-situ-Aktivierung verwendeten Karbide wurden bei hohen Temperaturen ähnlich wie in Beispiel I beschrieben aus chemisch reinen Grundsubstanzen präpariert und durch analysenreines Mahlen in eine feindispers-kolloidale Phase übergeführt.

$Sc Ru_3 C$
$Ce Ru_3 C$
$Sc Co_3 C$
$Sc Ir_3 C$

Die elektrophoretisch in drei bis vier Teilschritten beschichteten Elektroden wurden nach Beendigung der Aktivievierung gemäss Beispiel I formiert und stabilisiert. Die damit ausgerüsteten elektrolytischen Zellen erwiesen sich im Dauerbetrieb bei einer Stromdichte von 250 mA/cm² als langzeitstabil. Bei dieser Belastung und einer Temperatur von 80 °C wurde in 25 %iger KOH unter labortechnischen Bedingungen eine Herabsetzung der kathodischen Ueberspannung von mindestens 200 mV (ir-korrigierter Wert) gegenüber nicht aktivierten Elektroden erreicht.

Es soll noch darauf hingewiesen werden, dass die Präparierung der Aktivierungssubstanz ausgehend von chemisch reinen Stoffen selbstverständlich nach anderen Methoden als Mahlen, Wärmeabhandlungen, Festkörperreaktionen erfolgen kann. Darunter fallen z.B. die Verfahren des Ausfällens, der Co-Präzipitation etc.

Die Erfindung ist nicht auf die Beispiele beschränkt. Die Struktur der Oberflächenschicht muss nicht notwendigerweise der Fig. 2 entsprechen. Der poröse Körper 2 soll jedoch zahlreiche Hohlräume haben und bei einem Porenvolumen von mindestens 20 % eine grosse innere Oberfläche besitzen. Ferner ist es notwendig, dass die Oberflächenschicht auf dem Träger fest verankert, wenigstens teilweise zusammenhängend ist und sich auch bei Temperaturschwankungen elastisch verhält. Der poröse Körper 2 darf also im Betrieb keine Risse bekommen und nicht vom Träger 1 abblättern oder hydrodynamisch abgerieben bzw. abgeschält werden können. Diese Bedingung wird durch das Verfahren der elektrophoretischen In-Situ-Beschichtung und Ausbildung einer Kern-Waben-Struktur des Trägers 1 gewährleistet. Vom chemischen Aufbau her kommen daher nur Aktivierungssubstanzen in Frage, die sich unter den in der elektrochemischen Zelle herrschenden Betriebsbedingungen (Elektrolytzusammensetzung, Druck, Temperatur, Zeit etc.) nicht auflösen und nicht galvanisch auf dem Träger 1 abscheiden lassen. Dies sind alle schwerlöslichen, elektrokatalytisch aktiven Verbindungen, wobei jedoch die Löslichkeit je nach Randbedingungen in ziemlich weiten Grenzen schwanken kann. In der Regel sollte die chemische Löslichkeit etwa 0,1 bis 1 mg pro 1 nicht überschreiten.

Die für die Aktivierungssubstanz verwendete chemische Verbindung besteht aus mindestens einem der Elemente B, C, O, S, Se, Te mit mindestens einem Uebergangsmetall oder aus mindestens einem der vorgenannten Komponenten plus mindestens einem Uebergangsmetall und einem der Elemente der ersten und/oder zweiten Vertikalreihe des Perioden-Systems (Alkali- bzw. Erdalkalimetalle). Der spezifische Widerstand der Oberflächenschicht soll höchstens $10^4$ Ω, cm betragen. Die Oberflächenschicht kann auch aus mehreren Lagen von Aktivierungssubstanzen gleicher oder

unterschiedlicher chemischer Zusammensetzung bestehen.

Die nachfolgenden weiteren, zum Teil in den Beispielen nicht speziell erwähnten Aktivierungssubstanzen eignen sich für die kataphoretische In-Situ-Aktivierung und geben gute Resultate:

- $A_2^{II} E^{III} Ru^{V} O_6$ mit
  $A^{II}$ = Sr, Ba
  $E^{III}$ = Y, La, seltene Erde
- $Ba_3 E^{III} Ru_2 O_9$ mit
  $E^{III}$ = Y, La, seltene Erde
- $Ba Fe_{1-x} Ru_x O_{3-y}$ mit
  $0 < x < 0,98$
  $0 \leq y \leq 0,05$
- $A^{II} Ru O_3$ mit
  $A^{II}$ = ein Element der zweiten Vertikalreihe des periodischen Systems
- $G M O_4$ mit
  G = ein Element der ersten Vertikalreihe des periodischen Systems
  M = Re, Tc, Os
- $G_2 Re_3 S_6$ oder
  $A_2 Re_6 S_{11}$ mit
  G = ein Element der ersten Vertikalreihe des periodischen Systems
  A = ein Element der zweiten Vertikalreihe des periodischen Systems

Die aus einer kolloiddispersen Suspension auf den Träger 1 (Metall- oder Graphitelektrode) in Form eines festhaftenden, thermo- und hydromechanisch stabilen, elektrokatalytisch aktiven, Hohlräume 3 aufweisenden, porösen Körpers 2 elektrophoretisch aufgebrachte Aktivierungssubstanz wird durch Belastung der Elektrode mit einer Stromdichte von mindestens 1 A/cm$^2$ aufgesintert (eingebrannt) und stabilisiert. In gewissen Fällen erweist es sich als vorteilhaft, den Träger 1 zuvor durch Sandstrahlen auf seiner Oberfläche aufzurauhen. Dadurch wird letztere vergrössert und es werden günstige Bedingungen für die Verankerung der Oberflächenschicht geschaffen. Diese Methode ist insbesondere bei neuen Elektroden oder bei zwecks Ueberholung der Zellen ausgebauten Elektroden gegeben. Auf ähnliche Weise können unter Einhaltung geeigneter Bedingungen auch Anoden aktiviert und mit einer entsprechenden Oberflächenschicht versehen werden.

**Vorteile:**

Die besonderen Vorzüge der neuen Oberflächenschicht sowie des elektrophoretischen Aktivierungsverfahrens bestehen in folgendem:

- Besondere Eignung für den grosstechnischen industriellen Einsatz.
- Es werden keine teuren Edelmetalle in grösseren Mengen benötigt. Die Aktivierungssubstanzen sind verhältnismässig preiswert. (Bei den Rutheniumverbindungen handelt es sich um das z.Z. billigste Platinmetall.)
- Die bisherigen Erfahrungen lassen Langzeitstabilitäten für grosstechnische Anlagen von mehreren 10 000 h erwarten.
- Unempfindlichkeit gegenüber thermischer, elektrochemischer und hydromechanischer Ueber- und Wechselbelastung.
- Weitgehende Unempfindlichkeit gegenüber Elektrodenvergiftungen.
- Die Aktivierung kann in der fertig erstellten elektrochemischen Anlage (montierte Elektrolysezellen-Batterie) sowie in einer bereits bestehenden Anlage im Betrieb, ohne Betriebsunterbruch und ohne Zusatzeinrichtungen durchgeführt werden. Besonders wichtig: In-Situ-Verbesserungen einzelner schlechter, die Gasreinheit und den Wirkungsgrad herabsetzender Zellen, welche nach herkömmlicher Praxis ausgebaut und einzeln überholt und repariert werden mussten. Nach dem neuen Verfahren entfallen diese Arbeiten und die mit ihnen verbundenen Betriebsunterbrüche.
- Transportschäden an den Elektroden entfallen, da die elektrophoretische In-Situ-Aktivierung während oder nach der Inbetriebsetzung des Elektrolyseurs beim Kunden vorgenommen werden kann.
- Aeltere Anlagen mit schlechtem elektrochemischen Wirkungsgrad und schlechter Gasreinheit können ohne Demontage nachgebessert werden.

**Patentansprüche**

1. Verfahren zur Herstellung einer Elektrode (1) für elektrochemische Zellen, bei dem die Ueberspannung der Elektrode und damit der spezifische Energieverbrauch dieser Zellen durch In-Situ-Aktivierung herabgesetzt wird, wobei die dem verwendeten Elektrolyten der zu aktivierenden Zelle zuzugebene elektrophoretisch abscheidbare Aktivierungssubstanz, eine chemische Verbindung, bestehend aus mindestens einem der Elemente, B, C, O, S, Se, Te mit mindestens einem Uebergangsmetall oder bestehend aus mindestens einem der Elemente B, C, O, S, Se, Te mit mindestens einem der Elemente der ersten und/oder zweiten Vertikalreihe des Perioden-Systems und mit mindestens einem Uebergangsmetall ist, die in Form einer kolloiddispersen Suspension, in beliebiger, für die Ausbildung einer Oberflächenschicht (2) von 0.01 bis 0.05 mm Dicke ausreichenden Konzentration zugegeben wird, und diese dann unter Betriebsspannung und beliebiger Betriebsstromdichte im elektrischen Feld

der Zelle, im betriebsfähigen Zustand, elektrophoretisch auf der Elektrode (1), bestehend aus einem nichtfilmbildenden Metall oder Graphit, bei Betriebstemperatur, in situ, in feinverteilter Form abgeschieden wird, wodurch eine festhaftende, porös-elastische, thermo- und hydromechanisch stabile, elektrokatalytisch aktive Oberflächenschicht (2), mit einem Porenvolumen (3) von mindestens 20% und einem spezifischen elektrischen Widerstand von höchstens $10^4$ Ohm x cm aufgebaut wird, die dann bereits zehn Stunden nach Einleitung des Aktivierungsvorgangs durch Belastung der Elektrode (1) mit einer Stromdichte von mindestens 1 $A/cm^2$ aufgesintert und formiert wird.

2. Verfahren nach Anspruch 1 dadurch gekennzeichnet, daß die dem verwendeten Elektrolyten der zu aktivierenden elektrochemischen Zelle zugegebenen elektrophoretisch abscheidbaren kolloiddispersen Aktivierungssubstanz mindestens eine elektrophoretisch abscheidbare Verbindung aus der Klasse der Chalcogenide, Boride und/oder Karbide enthält,

3. Verfahren nach den Ansprüchen 1 bis 2 dadurch gekennzeichnet, daß als Ausgangsmaterialien zur Herstellung der Aktivierungssubstanz lösliche Verbindungen der die Aktivierungssubstanz konstituierenden Elemente verwendet und damit entsprechende Lösungen hergestellt werden, die Aktivierungssubstanz nach Mischung dieser Lösungen durch Fällung bzw. Co-Präzipitation ausgefällt, dekantiert, getrocknet, gemahlen und auf diese Weise in eine elektrophoretisch abscheidbare kolloiddisperse Phase übergeführt, in Form einer flüssigen Suspension aufgeschlämmt und elektrophoretisch auf der Elektrode abgeschieden wird.

4. Verfahren nach den Ansprüchen 1 bis 3 dadurch gekennzeichnet, daß einzelne als Ausgangsmaterialien der Aktivierungssubstanzen verwendete Komponenten zu feinkörnigen Pulvern gemahlen, im stöchiometrischen Verhältnis gemischt, einer Wärmebehandlung bei einer Temperatur unterhalb der Schmelztemperatur dieser Komponenten unterzogen, erneut gemahlen und nochmals einer gleichen Wärmebehandlung unterzogen und schließlich ein drittes Mal gemahlen und in eine elektrophoretisch abscheidbare kolloiddisperse Phase übergeführt, in Form einer flüssigen Suspension aufgeschlämmt und elektrophoretisch auf der Elektrode abgeschieden werden.

5. Verfahren nach den Ansprüchen 1 und 4 dadurch gekennzeichnet, daß als Ausgangsmaterialien die Komponenten $A^{II}CO_3$, mit $A^{II}$ = Sr, Ba und

$$E_2^{III}O_3,$$

mit $E^{III}$ = Y, La, seltene Erde und Ru verwendet werden und daß die erste Mahloperation in 2 Stunden, die erste Wärmebehandlung 16 Stunden lang bei 580 °C, die zweite Mahloperation 2 Stunden lang, die zweite Wärmebehandlung 6 Stunden lang bei 1200 °C und die dritte Mahloperation 10 bis 12 Stunden lang durchgeführt wird.

6. Verfahren nach Anspruch 5 dadurch gekennzeichnet, daß die letzte Wärmebehandlung und die letzte Mahloperation zusätzlich noch zwei oder dreimal wiederholt werden.

7. Verfahren nach den Ansprüchen 1, 4 und 5 dadurch gekennzeichnet, daß die dem verwendeten Elektrolyten in der zu aktivierenden elektrochemischen Zelle zugegebene, elektrophoretisch abscheidbare, kolloiddisperse Aktivierungssubstanz aus einer chemischen Verbindung der Form

$A_2^{II} E^{III} Ru^V O_6$

bestehen kann, wobei
$A^{II}$ = Sr, Ba
$E^{III}$ = Y, La, seltene Erde
bedeuten.

8. Verfahren nach den Ansprüchen 1, 4 und 5 dadurch gekennzeichnet, daß die dem verwendeten Elektrolyten in der zu aktivierenden elektrochemischen Zelle zugegebene, elektrophoretisch abscheidbare, kolloiddisperse Aktivierungssubstanz aus einer chemischen Verbindung der Form

$Ba_3 E^{III} Ru_2 O_9$

bestehen kann, wobei
$E^{III}$ = Y, La, seltene Erde
bedeuten.

9. Verfahren nach den Ansprüchen 1, 4 und 5 dadurch gekennzeichnet, daß die dem verwendeten Elektrolyten in der zu aktivierenden elektrochemischen Zelle zugegebene, elektrophoretisch abscheidbare, kolloiddisperse Aktivierungssubstanz aus einer chemischen Verbindung der Form

$Ba\ Fe_{1-x}\ Ru_x\ O_{3-y}$

bestehen kann, wobei
$0 < x < 0.98$
$0 \leq y \leq 0.05$
bedeuten.

**10.** Verfahren nach den Ansprüchen 1, 4 und 5 dadurch gekennzeichnet, daß die dem verwendeten Elektrolyten in der zu aktivierenden elektrochemischen Zelle zugegebene, elektrophoretisch abscheidbare, kolloiddisperse Aktivierungssubstanz aus einer chemischen Verbindung der Form

$Ba\ Fe_{0,1}\ Ru_{0,9}\ O_3$, oder
$La\ Fe_{1-x}\ Ru_x\ O_3$, mit

$0.9 \leq x \leq 1$,
bestehen kann.

**11.** Verfahren nach den Ansprüchen 1, 4 und 5 dadurch gekennzeichnet, daß die dem verwendeten Elektrolyten in der zuz aktivierenden elektrochemischen Zelle zugegebene, elektrophoretisch abscheidbare, kolloiddisperse Aktivierungssubstanz aus einer chemischen Verbindung der Form

$A^{II}\ RuO_3$

bestehen kann, wobei
$A^{II}$ ein Element der zweiten Vertikalreihe des Perioden-Systems ist.

**12.** Verfahren nach den Ansprüchen 1, 4 und 5 dadurch gekennzeichnet, daß die dem verwendeten Elektrolyten in der zu aktivierenden elektrochemischen Zelle zugegebene, elektrophoretisch abscheidbare, kolloiddisperse Aktivierungssubstanz aus einer chemischen Verbindung der Form

$La_4\ Re_6\ O_{19}$ ,
$La_2\ Re_2\ O_7$ oder
$La_4\ Re_2\ O_9$

bestehen kann.

**13.** Verfahren nach den Ansprüchen 1, 4 und 5 dadurch gekennzeichnet, daß die dem verwendeten Elektrolyten in der zu aktivierenden elektrochemischen Zelle zugegebene, elektrophoretisch abscheidbare, kolloiddisperse Aktivierungssubstanz aus einer chemischen Verbindung der Form

$GMO_4$

bestehen kann, wobei
G ein Element der ersten Vertikalreihe des Perioden-Systems und
M = Re, Tc, Os bedeuten.

**14.** Verfahren nach den Ansprüchen 1,4 und 5 dadurch gekennzeichnet, daß die dem verwendeten Elektrolyten in der zu aktivierenden elektrochemischen Zelle zugegebene, elektrophoretisch abscheidbare, kolloiddisperse Aktivierungssubstanz aus einer chemischen Verbindung der Form

$G_2\ Re_3\ S_6$ oder
$A_2\ Re_6\ S_{11}$

bestehen kann, wobei
G ein Element der ersten Vertikal-Reihe und A ein Element der zweiten Vertikalreihe des Perioden-Systems ist.

**15.** Verfahren nach den Ansprüchen 1, 3, 4 und 5 dadurch gekennzeichnet, daß die dem verwendeten Elektrolyten in der zu aktivierenden elektrochemischen Zelle zugegebene, elektrophoretisch abscheidbare, kolloiddisperse Aktivierungssubstanz aus einer chemischen Verbindung der Form

$U_2$ (Re, O, Mn, Ru) $B_6$ ,
U (Re, Os, Mn, Ru) $B_4$ ,
Lu (Ru, Os, Re) $B_4$ oder
$Y_2$ (Ru, Os, Re) $B_6$

bestehen kann, wobei die in Klammern stehenden Elemente jeweils allein oder auch in Kombination untereinander vorliegen oder sich gegenseitig ersetzen können.

**16.** Verfahren nach den Ansprüchen 1, 3, 4 und 5 dadurch gekennzeichnet, daß die dem verwendeten Elektrolyten in der zu aktivierenden elektrochemischen Zelle zugegebene, elektrophoretisch abscheidbare, kolloiddisperse Aktivierungssubstanz aus einer chemischen Verbindung der Form

$Sc\ Ru_3\ C$
$Ce\ Ru_3\ C$
$Sc\ Co_3\ C$
$Sc\ Ir_3\ C$

bestehen kann.

**17.** Verfahren nach Anspruch 1 dadurch gekennzeichnet, daß die elektrochemische Zelle, z.B.

eine Brennstoff-Zelle, eine Elektrodyalyse-Zelle oder eine Vorrichtung zur elektrolytischen Gewinnung von Metallen, Wasserstoff und Sauerstoff (Fig. 3) bzw. Ozon etc. sein kann mit Elektroden, bestehend aus nichtfilmbildenden Metallen oder Graphit (auch sandgestrahlt), wobei die dem verwendeten Elektrolyten zugegebene elektrophoretisch abscheidbare, kolloiddisperse Aktivierungssubstanz direkt in die Einzelzelle Fig. 3 (Anolyt und/oder Katolyt) gegeben wird (Einzelzellen-Aktivierung) oder über den Behälter 17 in die elektrochemische Zelle (Tank-Aktivierung) im Umlauf eingeführt wird.

18. Verfahren nach den Ansprüchen 1, 2, 3 sowie 8 bis 17 dadurch gekennzeichnet, daß die dem verwendeten Elektrolyten in der zu aktivierenden elektrochemischen Zelle, im betriebsfähigen Zustand, zugegebene, elektrophoretisch abscheidbare, kolloiddisperse Aktivierungssubstanz in die Zelle (Einzelzellen-Aktivierung) oder den Elektrolyt-Behälter (Tank-Aktivierung) während des laufenden Betriebes eingeführt wird, wodurch eine festhaftende, porös-elastische, thermo- und hydromechanisch stabile, elektro-katalytisch aktive Oberflächenschicht (2), mit einem Porenvolumen (3) von mindestens 20 % und einem spezifischen elektrischen Widerstand von höchstens $10^4$ Ohm x cm in Form einer Doppelwabenstruktur (5) mit Dendriten (4) strukturiert wird, wobei die die Doppelwabenstruktur (Stromatolithen) enthaltenen Hohlräume (3) im statistischen Mittel einen Durchmesser von 10 bis 50 µm un die Dendriten (4) Abmessungen von 0.001 bis 0.01 mm haben.

## Claims

1. Method for making an electrode (1) for electrochemical cells in which the overvoltage of the electrode and thus the specific energy consumption of these cells is reduced by an in-situ activation, where the electrophoretically depositable activator substance being added to the electrolyte used in the cell to be activated is a chemical compound consisting of at least one of the elements B, C, O, S, Se, Te and at least one transition metal, or consisting of at least one of the elements B, C, O, S, Se, Te, at least one of the elements of the first and/or second group of the periodic table, and at least one transition metal, which is added in the form of a colloidally disperse suspension having any concentration sufficient for the formation of a surface coating (2) having a thickness between 0.01 and 0.05 mm, and which is then deposited in situ electrophoretically in a finely divided form on electrode (1) consisting of a metal not forming films or of graphite, the deposition occurring at the operating voltage of the cell at any operating current density in the electrical field of the cell in its operational state and at the operating temperature, which gives rise to a strongly adhering, porous, elastic, thermomechanically and hydromechanically stable, electrocatalytically active surface coating (2) having a pore volume (3) of at least 20 % and a specific electric resistance of at most $10^4$ ohm cm which already ten hours after initiation of the activation process becomes sintered and formed by applying to the electrode (1) a current density of at least 1 A/cm$^2$.

2. The method of claim 1 wherein the electrophoretically depositable colloidally disperse activator substance being added to the electrolyte used in the electrochemical cell to be activated consists of at least one electrophoretically depositable compound selected from the group comprising chalcogenides, borides, and/or carbides.

3. The method of claims 1 and 2 wherein the starting materials used to prepare the activator substance are soluble compounds of the elements constituting the activator substance, of which the corresponding solutions are prepared from which the activator substance, after mixing of the solutions, is precipitated or coprecipitated, separated by decantation, dried, ground and thus transformed to an electrophoretically depositable, colloidally disperse phase, slurried up in the form of a liquid suspension, and electrophoretically deposited on the electrode.

4. The method of claims 1 to 3 wherein individual components serving as the starting materials for the activator substances are ground to fine powders, mixed in the stoichiometric ratio, subjected to heat treatment at a temperature below the melting points of these components, again ground, once more subjected to the same heat treatment, finally ground for a third time and transformed to an electrophoretically depositable, colloidally disperse phase, slurried up in the form of a liquid suspension, and electrophoretically deposited on the electrode.

5. The method of claims 1 and 4 wherein the components $A^{II}CO_3$ where $A^{II}$ = Sr or Ba, $E_2^{III}O_3$ where $E^{III}$ = Y, La, or a rare-earth element, and Ru are used as the starting materials and wherein the first grinding operation is performed for 2 hours, the first heat treatment is performed for 16 hours at 580 °C, the second grinding operation is performed for 2 hours, the second heat treatment is performed for 6 hours at 1200 °C, and the third grinding operation is performed for 10 to 12 hours.

**6.** The method of claim 5 wherein the last heat treatment and the last grinding operation are repeated for an additional two or three times.

**7.** The method of claims 1, 4, and 5 wherein the electrophoretically depositable, colloidally disperse activator substance which is added to the electrolyte used in the electrochemical cell to be activated consists of a chemical compound $A_2^{II}E^{III}Ru^{V}O_6$ where $A^{II}$ = Sr or Ba and $E^{III}$ = Y, La, or a rare-earth element.

**8.** The method of claims 1, 4, and 5 wherein the electrophoretically depositable, colloidally disperse activator substance which is added to the electrolyte used in the electrochemical cell to be activated consists of a chemical compound $Ba_3E^{III}Ru_2O_9$ where $E^{III}$ = Y, La, or a rare-earth element.

**9.** The method of claims 1, 4, and 5 wherein the electrophoretically depositable, colloidally disperse activator substance which is added to the electrolyte used in the electrochemical cell to be activated consists of a chemical compound $BaFe_{1-x}Ru_xO_{3-y}$ where $0 < x < 0.98$ and $0 \leq y \leq 0.05$.

**10.** The method of claims 1, 4, and 5 wherein the electrophoretically depositable, colloidally disperse activator substance which is added to the electrolyte used in the electrochemical cell to be activated consists of a chemical compound $BaFe_{0.1}Ru_{0.9}O_3$ or $LaFe_{1-x}Ru_xO_3$ where $0.9 \leq x \leq 1$.

**11.** The method of claims 1, 4, and 5 wherein the electrophoretically depositable, colloidally disperse activator substance which is added to the electrolyte used in the electrochemical cell to be activated consists of a chemical compound $A^{II}RuO_3$ where $A^{II}$ is an element of the second group of the periodic table.

**12.** The method of claims 1, 4, and 5 wherein the electrophoretically depositable, colloidally disperse activator substance which is added to the electrolyte used in the electrochemical cell to be activated consists of a chemical compound $La_4Re_6O_{19}$, $La_2Re_2O_7$, or $La_4Re_2O_9$.

**13.** The method of claims 1, 4, and 5 wherein the electrophoretically depositable, colloidally disperse activator substance which is added to the electrolyte used in the electrochemical cell to be activated consists of a chemical compound $GMO_4$ where G is an element of the first group of the periodic table and M = Re, Tc, or Os.

**14.** The method of claims 1, 4, and 5 wherein the electrophoretically depositable, colloidally disperse activator substance which is added to the electrolyte used in the electrochemical cell to be activated consists of a chemical compound $G_2Re_3S_6$ or $A_2Re_6S_{11}$ where G is an element of the first group and A is an element of the second group of the periodic table.

**15.** The method of claims 1, 3, 4, and 5 wherein the electrophoretically depositable, colloidally disperse activator substance which is added to the electrolyte used in the electrochemical cell to be activated consists of a chemical compound $U_2(Re,Os,Mn,Ru)B_6$, $U(Re,Os,Mn,Ru)B_4$, $Lu(Ru,Os,Re)B_4$, or $Y_2(Ru,Os,Re)B_6$ where the elements listed in parentheses can be present in each case, either alone or in combination, or can replace each other.

**16.** The method of claims 1, 3, 4, and 5 wherein the electrophoretically depositable, colloidally disperse activator substance which is added to the electrolyte used in the electrochemical cell to be activated consists of a chemical compound $ScRu_3C$, $CeRu_3C$, $ScCo_3C$, or $ScIr_3C$.

**17.** The method of claim 1 wherein the electrochemical cell is a fuel cell, an electrodialysis cell, or a device for the electrolytic winning of metals, hydrogen and oxygen (Figure 3) or ozone which is provided with electrodes consisting of metals not forming films or of graphite (including sandblasted material), and wherein the electrophoretically depositable, colloidally disperse activator substance which is added to the electrolyte used is introduced directly into the individual cell of Figure 3 (anolyte and/or catholyte: individual cell activation) or, via the vessel 17, into the loop of the electrochemical cell (tank activation).

**18.** The method of claims 1, 2, 3, and 8 to 17 wherein the electrophoretically depositable, colloidally disperse activator substance which is added to the electrolyte used in the operational electrochemical cell to be activated is introduced into the cells (individual cell activation) or into the electrolyte vessel (tank activation) during operation yielding a strongly adhering, porous, elastic, thermomechanically and hydromechanically stable, electrocatalytically active surface coating (2) having a pore volume (3) of at least 20 % and a specific electrical resistance of at most $10^4$ ohm cm in the form of a double honeycomb structure (5) with dendrites (4) where the voids (3) contained in the double honeycomb structure (stomatolites) have a statistical mean diameter of 10 to 50 $\mu$m and the dendrites (4) have dimensions of 0.001 to 0.01 mm.

## Revendications

1. Un procédé pour la préparation d'une électrode (1) de cellule électrochimique dans laquelle la surtension d'électrode et ainsi la consommation spécifique d'énergie de la cellule est réduite par une activation in situ, où la substance activatrice déposable électrophorétiquement étant ajoutée à l'électrolyte utilisé dans la cellule à activer est un composé chimique constitué d'au moins un des éléments B, C, O, S, Se, Te et d'au moins un métal de transition, ou constitué d'au moins un des éléments B, C, O, S, Se, Te, d'au moins un des éléments du premier et/ou du second groupe de la table périodique, et d'au moins un métal de transition qui est ajouté sous forme d'une suspension colloïdale dispersée ayant n'importe quelle concentration suffisante pour la formation d'une couche superficielle (2) ayant une épaisseur comprise entre 0.01 et 0.05 mm, et qui est ensuite déposée électrophorétiquement in situ sous forme finement divisée sur l'électrode (1) constituée de graphite ou d'un métal ne formant pas de couche d'oxyde, le dépôt intervenant à la tension de fonctionnement de la cellule à n'importe quelle densité de courant dans le champ électrique de la cellule en état de fonctionnement et à la température de fonctionnement, qui donne lieu à une couche superficielle (2) électrocatalytiquement active, fortement adhérente, poreuse, élastique, thermomécaniquement et hydromécaniquement stable ayant un volume poreux (3) d'au moins 20 % et une résistivité specifique d'au plus $10^4$ ohm cm qui déjà 10 heures après l'initiation du procédé d'activation devienne frittée et formée en appliquant sur l'électrode (1) une densité de courant d'au moins 1 A/cm$^2$.

2. La méthode de la revendication 1 dans laquelle la substance activatrice colloïdale dispersée et déposable électrophorétiquement ajoutée à l'électrolyte utilisé dans la cellule électrochimique à activer est constituée d'au moins un composé déposable électrophorétiquement sélectionné à partir du groupe comprenant les chalcogénures, les borures, et/ou les carbures.

3. La méthode des revendications 1 et 2 dans laquelle les produits de départ utilisés pour préparer la substance activatrice sont des composés solubles des éléments constituant la substance activatrice, à partir desquels les solutions correspondantes sont préparées à partir des quelles, après mélange des solutions, la substance activatrice est précipitée ou coprécipitée, separée par décantation, séchée, broyée et ainsi transformée en une phase colloïdale dispersée et électrophorétiquement déposable, mise sous forme d'une suspension liquide et déposée électrophorétiquement sur la cathode.

4. La méthode des revendications 1 à 3 dans laquelle les composés individuels servant de produit de départ pour les substances activatrices sont broyés en poudres fines et mélangés en proportion stoechiométriques, soumis à un traitement à chaud à une température inférieure au point de fusion de ces composants, broyés à nouveau, soumis une fois encore au même traitement à chaud, finalement broyés une troisième fois et transformés en une phase colloïdale dispersée et déposable électrophorétiquement, mis sous forme d'une suspension liquide et deposés électrophorétiquement sur l'électrode.

5. La méthode des revendications 1 et 4 dans laquelle les composants $A^{II}CO_3$ où $A^{II}$ = Sr ou Ba, $E_2^{III}O_3$ où $E^{III}$ = Y, La ou un élément des terres rares, et Ru sont utilisés comme produits de départ et où la première opération de broyage est pratiquée durant 2 heures, le premier traitement à chaud est effectué pendant 16 heures à 580 °C, la deuxième opération de broyage est pratiquée durant 2 heures, le deuxième traitement à chaud est effectué pendant 6 heures à 1200 °C et la troisième opération de broyage est pratiquée pendant 10 à 12 heures.

6. La méthode de la revendication 5 dans laquelle le dernier traitement à chaud et la dernière opération de broyage sont répétés deux ou trois fois de plus.

7. La méthode des revendications 1, 4 et 5 dans laquelle la substance activatrice colloïdale dispersée et déposable électrophorétiquement qui est ajoutée à l'électrolyte utilisé dans la cellule électrochimique à activer est constituée d'un composé chimique $A_2^{II}E^{III}Ru^{V}O_6$ où $A^{II}$ = Sr ou Ba et $E^{III}$ = Y, La ou un élément des terres-rares.

8. La méthode des revendications 1, 4 et 5 dans laquelle la substance activatrice colloïdale dispersée et déposable électrophorétiquement qui est ajoutée à l'électrolyte utilisé dans la cellule électrochimique à activer est constituée d'un composé chimique $Ba_3E^{III}Ru_2O_9$ où $E^{III}$ = Y, La ou un élément des terres-rares.

9. La méthode des revendications 1, 4 et 5 dans laquelle la substance activatrice colloïdale dispersée et déposable électrophorétiquement qui est ajoutée à l'électrolyte utilisé dans la cellule électrochimique à activer est constituée d'un composé chimique $BaFe_{1-x}Ru_xO_{3-y}$ où $0 < x < 0.98$ et $0 \leqq y \leqq 0.05$.

10. La méthode des revendications 1, 4 et 5 dans laquelle la substance activatrice colloïdale dispersée et déposable électrophorétiquement qui est ajoutée à l'électrolyte utilisé dans la cellule électrochimique à activer est constituée d'un composé chimique $BaFe_{0.1}Ru_{0.9}O_3$ ou $LaFe_{1-x}Ru_xO_3$ où $0.9 \leqq x \leqq 1$.

11. La méthode des revendications 1, 4 et 5 dans laquelle la substance activatrice colloïdale dispersée et déposable électrophorétiquement qui est ajoutée à l'électrolyte utilisé dans la cellule électrochimique à activer est constituée d'un composé chimique $A^{II}RuO_3$ où $A^{II}$ est un élément du second groupe de la table périodique.

12. La méthode des revendications 1, 4 et 5 dans laquelle la substance activatrice colloïdale dispersée et déposable électrophorétiquement qui est ajoutée à l'électrolyte utilisé dans la cellule électrochimique à activer est constituée d'un composé chimique $La_4Re_6O_{19}$, $La_2Re_2O_7$ ou $La_4Re_2O_9$.

13. La méthode des revendications 1, 4 et 5 dans laquelle la substance activatrice colloïdale dispersée et déposable électrophorétiquement qui est ajoutée à l'électrolyte utilisé dans la cellule électrochimique à activer est constituée d'un composé chimique $GMO_4$ où G est un élément du permier groupe de la table périodique et M = Re, Tc ou Os.

14. La méthode des revendications 1, 4 et 5 dans laquelle la substance activatrice colloïdale dispersée et déposable électrophorétiquement qui est ajoutée à l'électrolyte utilisé dans la cellule électrochimique à activer est constituée d'un composé chimique $G_2Re_3S_6$ ou $A_2Re_6S_{11}$ où G est un élément du premier groupe et A est un élément du second groupe de la table périodique.

15. La méthode des revendications 1, 3, 4 et 5 dans laquelle la substance activatrice colloïdale dispersée et déposable électrophorétiquement qui est ajoutée à l'électrolyte utilisé dans la cellule électrochimique à activer est constituée d'un composé chimique $U_2(Re,Os,Mn,Ru)B_6$, $U(Re,Os,Mn,Ru)B_4$, $Lu(Ru,Os,Re)B_4$ ou $Y_2(Ru,Os,Re)B_6$ où les éléments indiqués entre parenthèses peuvent être présents dans chacun des cas, seuls ou en combinaisons, ou peuvent être remplacés l'un par l'autre.

16. La méthode des revendications 1, 3, 4 et 5 dans laquelle la substance activatrice colloïdale dispersée et déposable électrophorétiquement qui est ajoutée à l'électrolyte utilisé dans la cellule électrochimique à activer est constituée d'un composé chimique $ScRu_3C$, $CeRu_3C$, $ScCo_3C$ ou $ScIr_3C$.

17. La méthode de la revendication 1 dans laquelle la cellule électrochimique est une pile à combustible, une cellule d'électrodialyse, ou un dispositif pour l'extraction électrolytique des métaux, de l'hydrogène et de l'oxygène (Figure 3) ou de l'ozone qui est formée avec des électrodes constituées de métaux ne formant pas de film ou de graphite (y compris les matériaux sablés), et dans laquelle la substance activatrice colloïdale dispersée et déposable électrophorétiquement qui est ajoutée à l'électrolyte utilisée, est introduite directement dans la cellule individuelle de la Figure 3 (anolyte et/ou catholyte: activation individuelle de la cellule) ou, par l'intermédiaire du récipient 17, dans le circuit de la cellule électrochimique (activation de l'électrolyseur).

18. La méthode des revendications 1, 2, 3 et 8 à 17 dans laquelle la substance activatrice dispersée colloïdalement qui est ajoutée à l'électrolyte utilisé dans une cellule électrochimique en fonctionnement à activer est introduite dans les cellules (activation de cellule individuelle) ou dans un récipient à électrolyte (activation de l'électrolyseur) en cours de fonctionnement, conduisant à une couche superficielle (2) électrocatalytique, fortement adhérente, poreuse, élastique, thermomécaniquement et hydromécaniquement stable, ayant un volume poreux (3) d'au moins 20 % et une résistivité spécifique d'au plus $10^4$ ohm cm sous forme de structure à double nids d'abeilles (5) avec des dendrites (4) où les vides (3) contenus dans la

structure à nid d'abeilles (stomatolites) ont un diamètre moyen statistique de 10 à 50 µm et les dendrites (4) ont des dimensions de 0.001 à 0.01 mm.

FIG.1

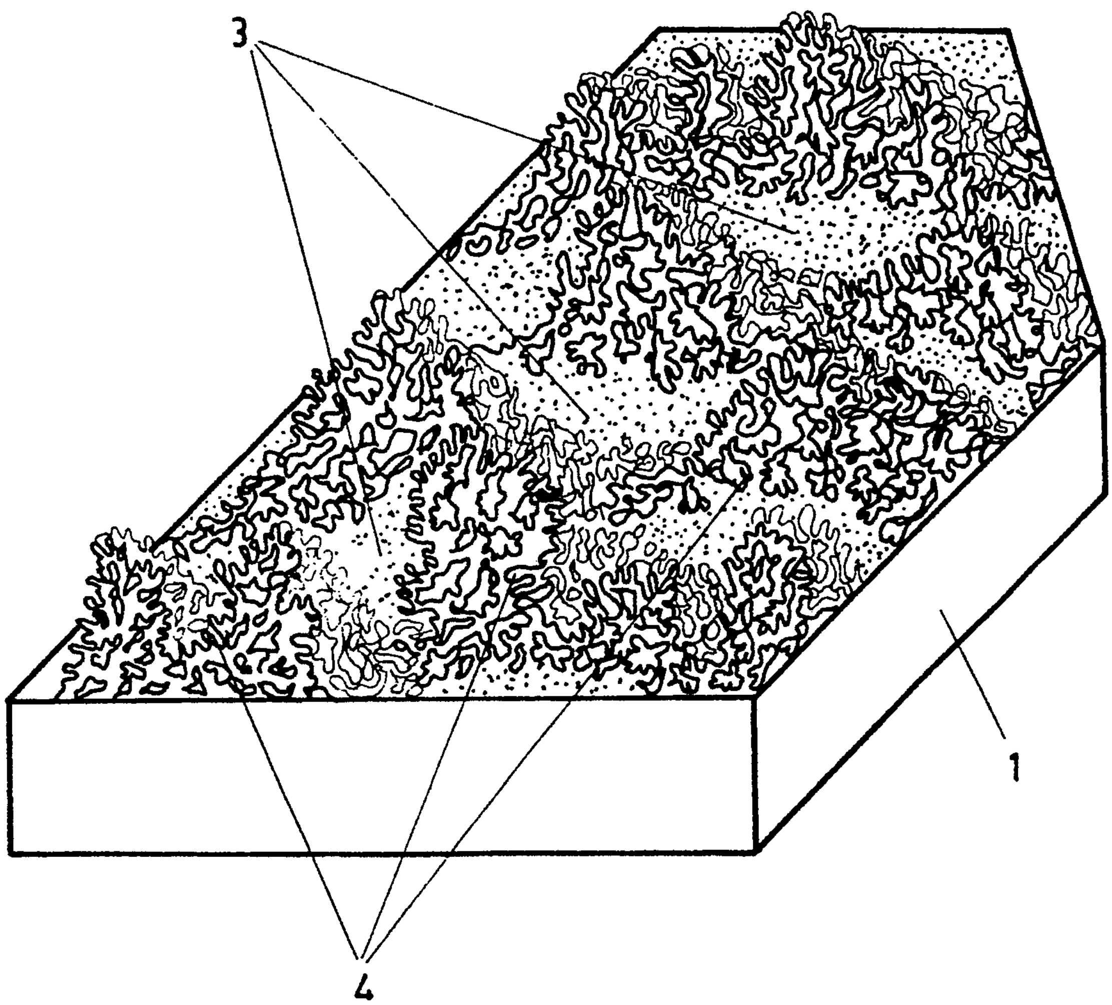

FIG. 2

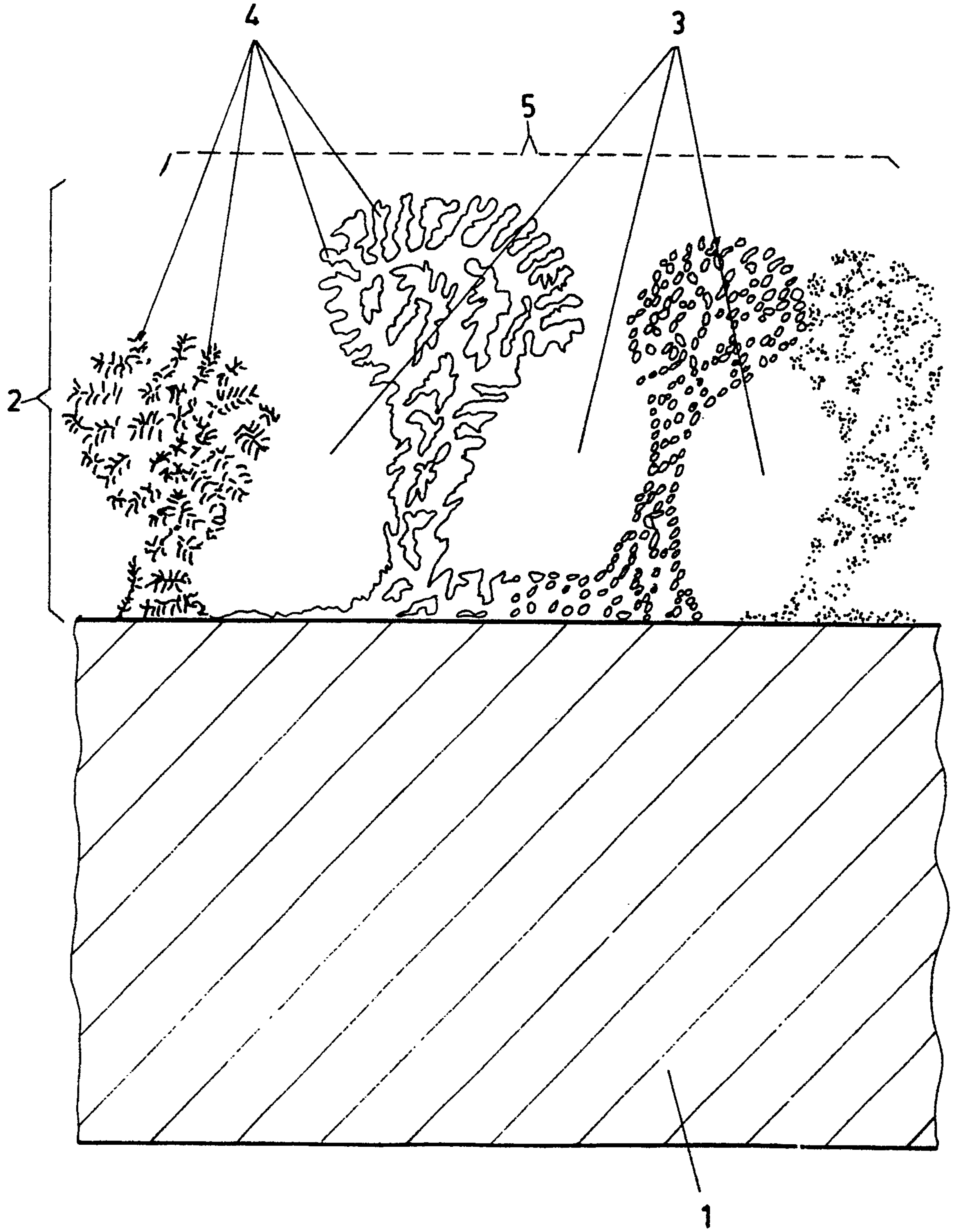

FIG. 3

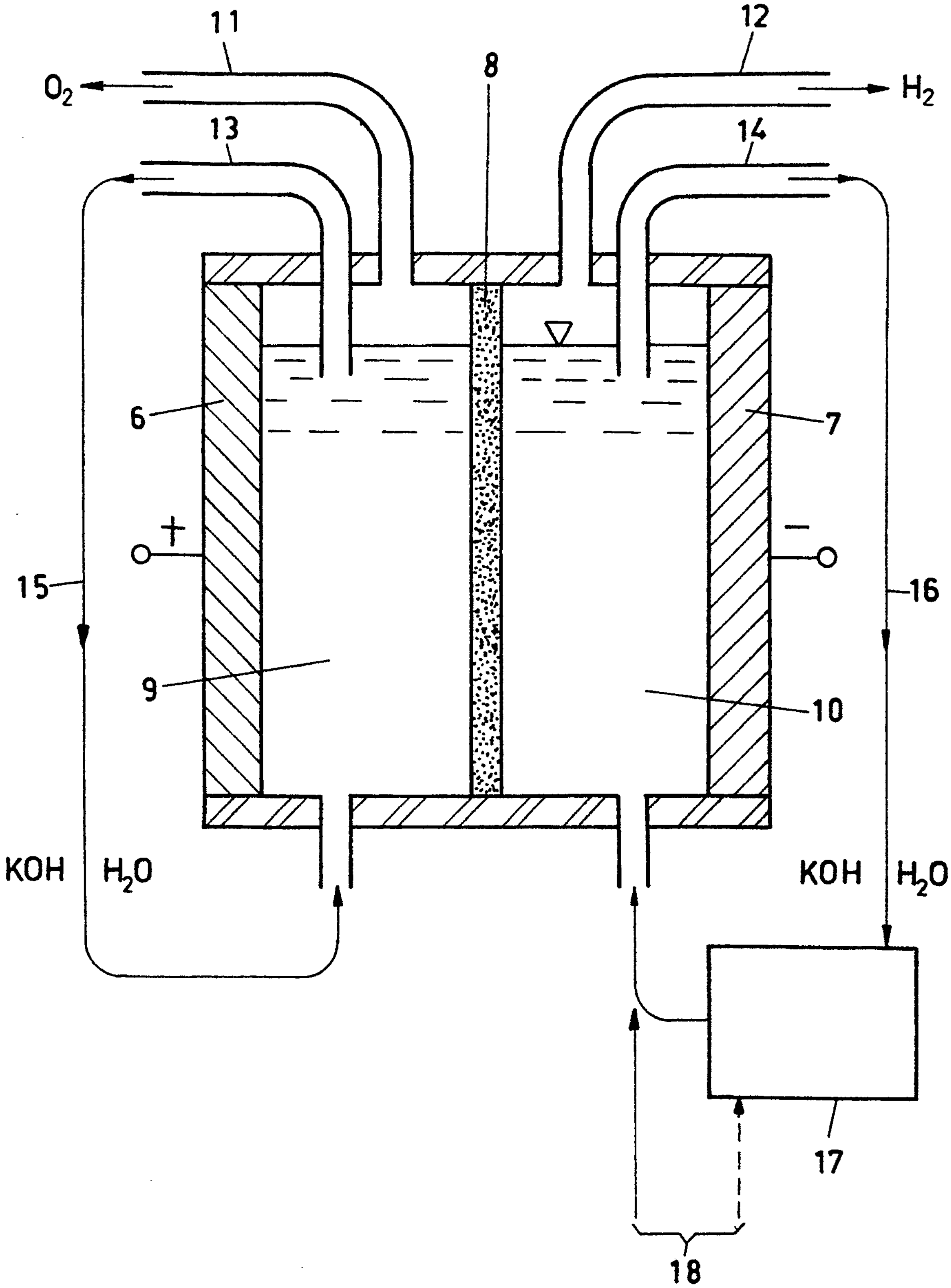

FIG. 4

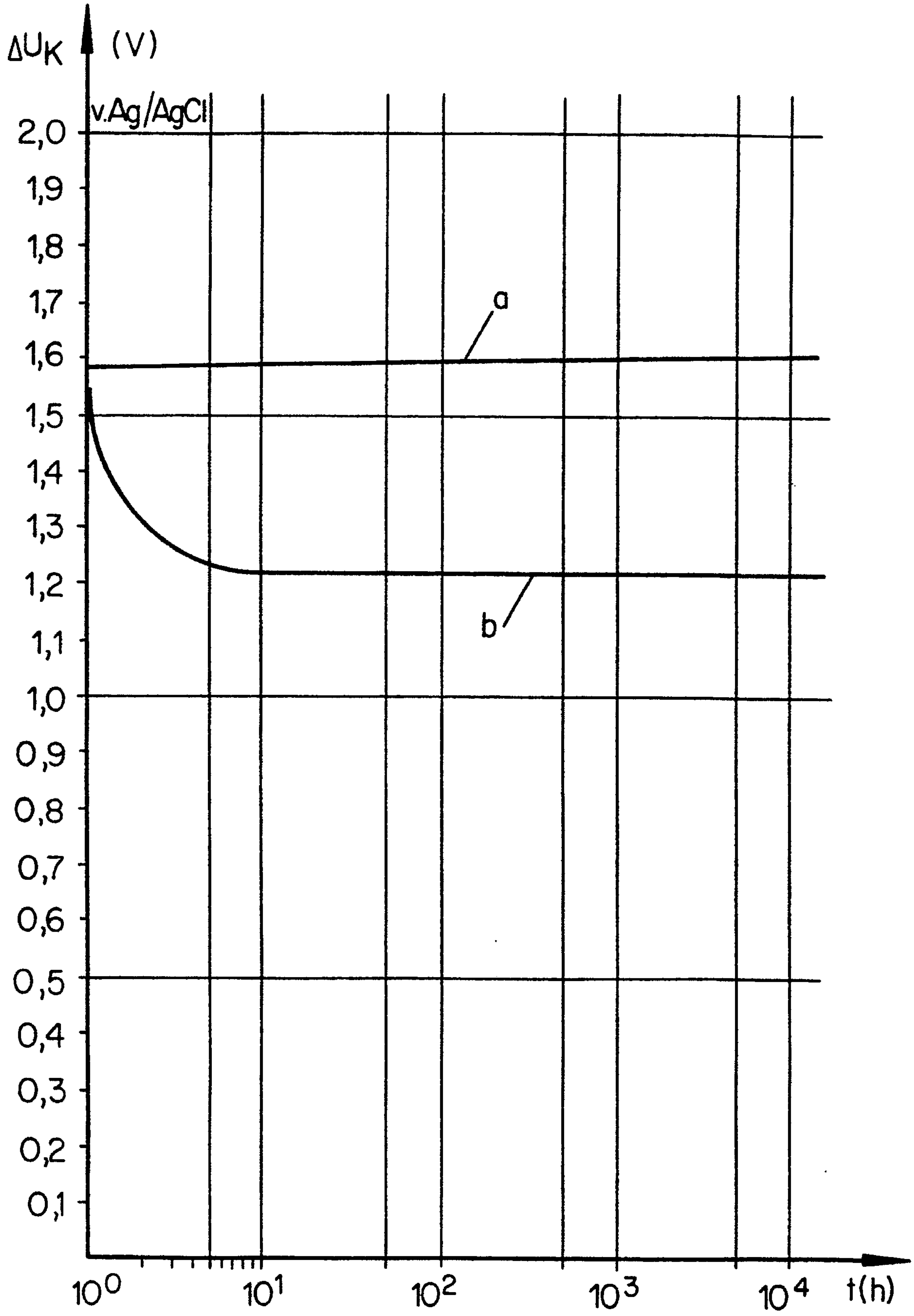
ΔU_K (V)
v.Ag/AgCl
2,0
1,9
1,8
1,7
1,6
1,5
1,4
1,3
1,2
1,1
1,0
0,9
0,8
0,7
0,6
0,5
0,4
0,3
0,2
0,1
a
b
10^0
10^1
10^2
10^3
10^4
t(h)

FIG. 5

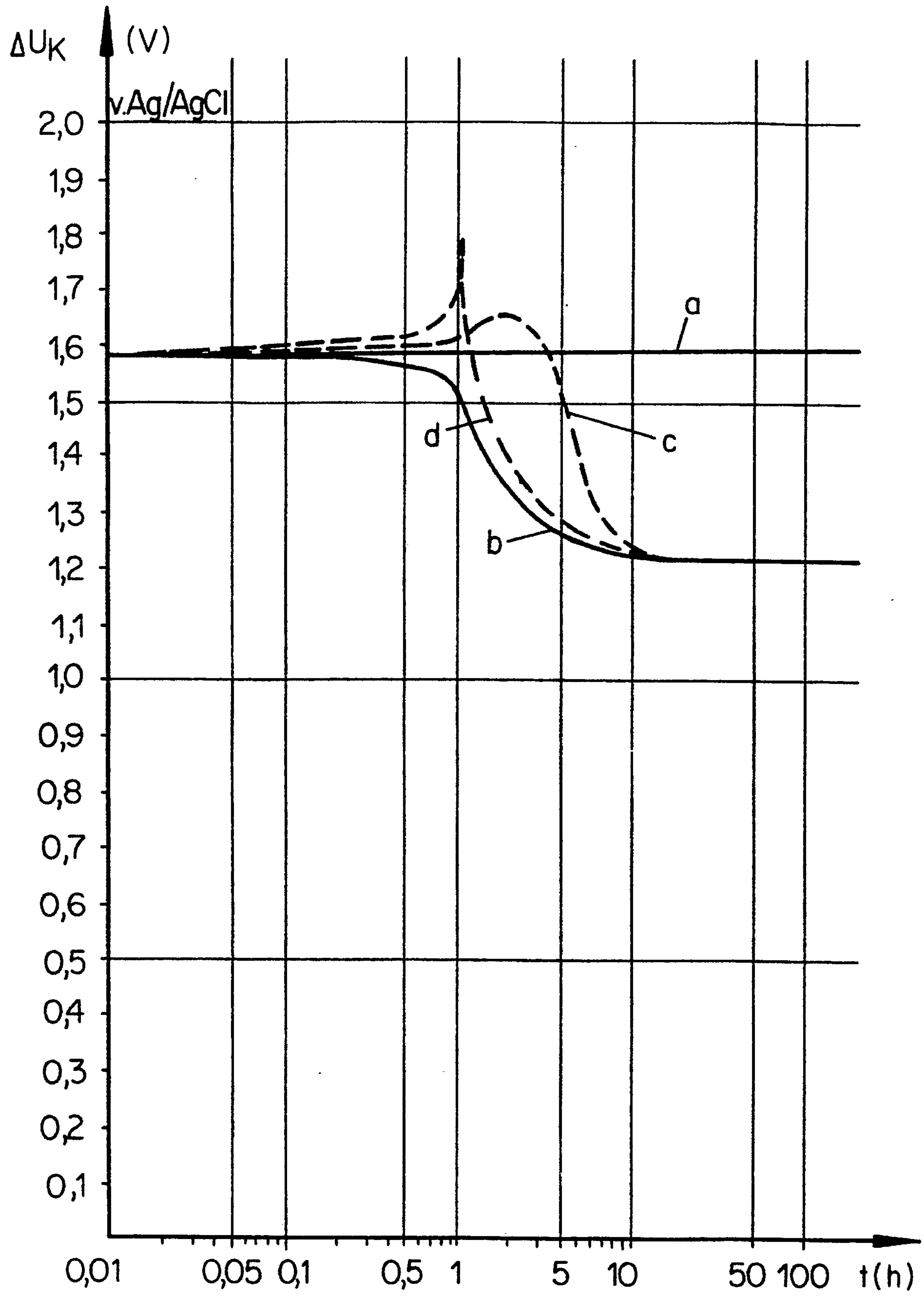
ΔU_K (V)
v.Ag/AgCl
2,0
1,9
1,8
1,7
1,6
1,5
1,4
1,3
1,2
1,1
1,0
0,9
0,8
0,7
0,6
0,5
0,4
0,3
0,2
0,1
a
b
c
d
0,01
0,05
0,1
0,5
1
5
10
50
100
t (h)